# EUROPÄISCHE PATENTSCHRIFT

(11) **EP 1 702 842 B1**
(45) Veröffentlichungstag und Bekanntmachung des Hinweises auf die Patenterteilung: **13.05.2009**
(21) Anmeldenummer: 06005421.0
(22) Anmeldetag: 16.03.2006
(51) Int. Cl.: B64D 41/00, H01M 8/04

(54) **Luftfahrzeug mit einer Brennstoffzelle**
Aircraft comprising a fuel cell
Aéronef comprenant une pile à combustible

(30) Priorität: 16.03.2005 DE 102005012120
(43) Veröffentlichungstag der Anmeldung: 20.09.2006
(73) Patentinhaber: Liebherr-Aerospace Lindenberg GmbH, 88161 Lindenberg/Allgäu (DE)
(72) Erfinder: Metzler, Dirk, 6912 Hörbranz (AT); Brugger, Ralf, 88239 Wangen (DE)
(74) Vertreter: Herrmann, Uwe

(56) Entgegenhaltungen:
- EP-A- 1 099 630
- WO-A-20/04051780
- US-A- 3 704 172
- US-A1- 2004 121 218
- US-B1- 6 558 827

## Beschreibung

Die Erfindung betrifft ein Luftfahrzeug, insbesondere ein Flugzeug, mit wenigstens einer Brennstoffzelle, mit wenigstens einer Versorgungsleitung, die die Brennstoffzelle mit einer Brennstoffversorgung verbindet, mit wenigstens einer Auslassleitung, mittels derer durch die Versorgungsleitung zugeführter und in der Brennstoffzelle nicht verbrauchter Brennstoff abgeführt wird, sowie mit Mitteln zur Beeinflussung des Brennstoffdurchsatzes durch die Brennstoffzelle.

Der Einsatz von Brennstoffzellen in der Luftfahrt ist bekannt. Die Brennstoffzellen liefern elektrische Energie, die zum Antrieb verschiedener Bauelemente eines Luftfahrzeuges genutzt werden kann. Der Vorteil des Einsatzes von Brennstoffzellen ist ein gegenüber konventionellen Systemen verbesserter Wirkungsgrad bei reduzierten Schadstoff- und Lärmemissionen. Bei aus den Technik bekannten Brennstoffzellen erfolgt die Zufuhr der Brennstoffe zu der Brennstoffzelle mittels Versorgungsleitungen, die mit einer entsprechenden Brennstoffversorgung in Verbindung stehen. Dabei befinden sich in den Versorgungsleitungen Durchsatzregeleinrichtungen, im allgemeinen sogenannte massflow controller, die den gewünschten Brennstoffdurchsatz durch die Anoden- und Kathodenseite der Brennstoffzelle gewährleisten. Der Nachteil derartiger Durchsatzregeleinrichtungen besteht in einer vergleichsweise hohen Fehleranfälligkeit sowie in dem mit deren Einsatz verbundenen regelungstechnischen Aufwand.

Die Druckschrift US 2004/0121218 A1 betrifft eine Brennstoffzellen-Anordnung, die einlasseitig der Brennstoffzelle Ventile aufweist und auslassseitig des weiteren Magnetventile aufweist, die zu Wasserabfuhr aus dem System geöffnet werden können.

Die WO 2004/051780 A2 betrifft ein Brennstoffzellen-System, bei der in der Auslassleitung ein Ventil vorgesehen ist, das durch einen Controller derart angesteuert wird, so dass die Stickstoffkonzentration brennstoffseitig konstant bleibt.

Die Druckschrift WO 2005/004269 A2 offenbart eine Brennstoffzelle für ein Fahrzeug, wobei brennstoffseitig ist eine Brennstoffzuleitung und eine Ableitung vorgesehen sind. Auslassseitig der Brennstoffzelle ist nach einem Wasserabscheider in der Ableitung ein Spenventil angeordnet.

Es ist daher die Aufgabe der Erfindung, ein Luftfahrzeug, insbesondere ein Flugzeug der eingangs genannten Art dahingehend weiterzubilden, dass die Mittel zur Beeinflussung des Brennstoffdurchsatzes einfach aufgebaut sind und eine geringe Fehleranfälligkeit aufweisen.

Erfindungsgemäß wird diese Aufgabe durch ein Luftfahrzeug mit den Merkmalen des Anspruchs 1 gelöst.

Diese Aufgabe wird somit ausgehend von einem Luftfahrzeug gemäß dem Oberbegriff des Anspruchs 1 dadurch gelöst, dass die Mittel zur Beeinflussung bzw. Einstellung des Brennstoffdurchsatzes einen in der wenigstens einen Versorgungsleitung befindlichen Druckregler sowie ein in der wenigstens einen Auslassleitung befindliches Drosselelement aufweisen, wobei der Druckregler den Druck der Brennstoffversorgung auf den Betriebsdruck der Brennstoffzelle mindert bzw. regelt und wobei das Drosselelement den Durchsatz des durch die Auslassleitung strömenden, nicht verbrauchten Brennstoffes drosselt. Eine Durchsatzregeleinrichtung ist nicht vorgesehen.

Die Brennstoffzelle wird mit einem "Brennstoff-overflow" betrieben, d.h. es wird mehr Brennstoff zugeführt als in der Brennstoffzelle umgesetzt wird.

Abweichend von vorbekannten Systemen wird die erfindungsgemäße Brennstoffzelle somit nicht bei konstantem Massen- oder Volumenstrom betrieben, der über einen vergleichsweise fehleranfälligen Regler eingestellt wird, sondern die Brennstoffzelle wird bei konstantem Druck betrieben, zu dessen Einstellung ein stromaufwärts der Brennstoffzelle angeordneter Druckregler bzw. Druckminderer dient, der den Versorgungsdruck auf den Betriebsdruck der Brennstoffzelle reduziert. Stromabwärts der Brennstoffzelle befindet sich in der zugehörigen abführenden Leitung eine Drossel, die den Durchsatz des durch die Abgasleitung strömenden Brennstoffes reduziert und sicherstellt, dass auch bei geringem Druck stromabwärts der Drossel kein zu großer Durchsatz durch die Brennstoffzelle vorliegt.

Eine derartige Anordnung wird vorzugsweise auf der Anodenseite der Brennstoffzelle eingesetzt.

In bevorzugter Ausgestaltung handelt es sich bei der Brennstoffversorgung um einen Wasserstoffbehälter oder um eine wasserstoffführende Leitung. Von dem Wasserstoffbehälter bzw. der Leitung führt die genannte Versorgungsleitung zu der Anode der Brennstoffzelle, deren Druck mittels des in dieser Versorgungsleitung befindlichen Druckreglers auf den gewünschten Wert eingestellt ist. Der auf diese Weise zugeführte und nicht verbrauchte Wasserstoff wird mittels der Auslassleitung abgeführt, in der sich die Drossel befindet. Die Auslassleitung mündet erfindungsgemäß in einem Stauluftkanal des Flugzeuges, d.h. der überschüssige Brennstoff bzw. Wasserstoff wird mit dem sehr viel größeren Stauluftstrom gemischt.

In weiterer Ausgestaltung der Erfindung ist eine weitere Versorgungsleitung vorgesehen, die eine weitere Brennstoffquelle mit der Brennstoffzelle verbindet. Ferner ist eine weitere Auslassleitung vorgesehen, mittels derer durch die weitere Versorgungsleitung zugeführter und in der Brennstoffzelle nicht verbrauchter Brennstoff abgeführt wird. Vorzugsweise liegt auch für den aus der weiteren Brennstoffversorgung bezogenen Brennstoff ein "overflow" vor, d.h. die Menge des der Brennstoffzelle zugeführten Brennstoffes ist größer als die Menge des verbrauchten Brennstoffes.

In weiterer Ausgestaltung der Erfindung ist ein Verdichter vorgesehen, der zum Zwecke der Kreislaufführung vorzugsweise in einer die weitere Versorgungsleitung mit der weiteren Abgasleitung verbindenden Leitung angeordnet ist.

Bei der genannten weiteren Brennstoffquelle kann es sich um eine Sauerstoffquelle oder um eine Luftquelle, beispielsweise in Form eines Behälters oder einer Leitung handeln. Der durch die Kreislaufführung bedingte vergrößerte Volumenstrom bewirkt, dass auf der Kathodenseite der Brennstoffzelle entstandenes Wasser besonders wirksam entfernt wird.

In bevorzugter Ausgestaltung der Erfindung ist auch in der weiteren Versorgungsleitung ein Druckregler vorgesehen, der den Druck der weiteren Brennstoffversorgung auf den Betriebsdruck der Brennstoffzelle mindert bzw. auf den eingestellten Wert regelt.

Wie oben ausgeführt, kann es sich bei der weiteren Brennstoffversorgung um einen Sauerstoff oder Luft enthaltenden Behälter oder um eine Sauerstoff oder Luft führende Leitung handeln, wobei die weitere Versorgungsleitung von der Brennstoffversorgung zu der Kathode der Brennstoffzelle hinführt und die weitere Auslassleitung von der Kathode der Brennstoffzelle abführt.

In dem aus der weiteren Versorgungsleitung, der weiteren Auslassleitung und der Verbindungsleitung bestehenden Leitungssystem sind vorzugsweise ein oder mehrere Wasserabscheider angeordnet, mittels deren überschüssiges bei der Reaktion in der Brennstoffzelle angefallenes Wasser abgeführt werden kann.

In weiterer Ausgestaltung der Erfindung ist vorgesehen, dass in wenigstens einer der Versorgungsleitungen stromabwärts des Druckreglers ein oder mehrere Ventile, vorzugsweise ein oder mehrere Mehrwegeventile vorgesehen sind, die in einer ersten Position die Brennstoffversorgung mit der Brennstoffzelle und in einer zweiten Position die Brennstoffversorgung mit einer weiteren Leitung oder Einheit verbinden. Bei der weiteren Leitung kann es sich beispielsweise um eine Abluftleitung handeln. Vorzugsweise handelt es sich bei der weiteren Leitung um eine die Brennstoffzelle umgehenden Bypassleitung. Denkbar ist auch, dass die Ventile eine Position aufweisen, in der weder eine Brennstoffzufuhr in die Brennstoffzelle noch die in genannte Leitung erfolgt.

Das oder die Ventile oder Mehrwegeventile ermöglichen es, die Funktionsfähigkeit der Druckregelstrecke zu prüfen. Dazu kann das oder die Ventile / Mehrwegeventile in die zweite Position gestellt werden, in der der oder die Brennstoffbehälter mit den jeweiligen Leitungen, Einheiten bzw. Bypassleitungen verbunden werden. In diesen kann sodann eine Druckmessung vorgenommen werden, um feststellen zu können, ob der mittels der Druckregler eingestellte Druck tatsächlich erhalten wird. Eine derartige Anordnung ist von Bedeutung, um mit geringem Aufwand feststellen zu können, dass das System einwandfrei funktioniert und im Notfall als Energiequelle sofort zur Verfügung steht.

Anstelle von Ventilen oder Mehrwegventilen sind auch beliebige andere Mittel einsetzbar, die die genannte Strömungsführung ermöglichen.

In einer weiteren Ausgestaltung der Erfindung ist eine mit Kühlmittel beaufschlagte Kühleinrichtung zur Kühlung der Brennstoffzelle vorgesehen, die mit einer von dem Kühlmittel durchströmten Leitung in Verbindung steht, in der zum Zwecke der Erwärmung des Brennstoffes ein von Brennstoff durchströmter Wärmetauscher angeordnet ist, der brennstoffseitig stromaufwärts der Brennstoffzelle und kühlmittelseitig stromabwärts der Brennstoffzelle durchströmt wird. Die Kühleinrichtung mit Kühlmittelleitung dient somit einerseits zur Kühlung der Brennstoffzelle und in ihrem von der Brennstoffzelle stromabwärtigen Abschnitt zur Vorwärmung des der Brennstoffzelle zugeführten Brennstoffes. Die Kühlung des Kühlmittels kann mittels eines in dem Stauluftkanal angeordneten Wärmetauschers erfolgen.

Bei der Brennstoffzelle kann es sich beispielsweise um eine PEM-Zelle (PEM = Proton Exchange Membrane) handeln. Grundsätzlich ist aber auch der Einsatz von Hochtemperaturzellen nicht ausgeschlossen. Unter "Brennstoffzelle" kann eine einzelne Brennstoffzelle, vorzugsweise jedoch ein Stapel derartiger Einheiten zu verstehen sein.

Das Drosselelement ist vorzugsweise auf seine Stopfgrenze ausgelegt, d.h. unabhängig von Umgebungsbedingungen bzw. Druck übersteigt der Durchsatz eine bestimmte Grenze nicht.

Die Erfindung betrifft ferner ein Verfahren zum Betreiben einer Brennstoffzelle eines Luftfahrzeuges mit den Merkmalen des Anspruchs 13, wobei die Brennstoffzelle mittels wenigstens einer Versorgungsleitung mit Brennstoff aus einer Brennstoffversorgung versorgt wird und wobei in der Brennstoffzelle nicht verbrauchter Brennstoff mittels wenigstens einer Auslassleitung aus der Brennstoffzelle abgeführt wird. Erfindungsgemäß ist vorgesehen, dass der Brennstoffdurchsatz dadurch eingestellt wird, dass in der Versorgungsleitung der Druck der Brennstoffversorgung auf den Betriebsdruck der Brennstoffzelle gemindert bzw. auf diesen Wert geregelt wird und dass in der Auslassleitung eine Drosselung des in der Auslassleitung strömenden nicht verbrauchten Brennstoffes erfolgt. Der Einsatz eines Durchsatzreglers ist nicht erforderlich und auch nicht vorgesehen. Bei dem Brennstoff kann es sich um Wasserstoff handeln. Diese Ausgestaltung des Verfahrens betrifft vorzugsweise die Anodenseite der Brennstoffzelle.

In weiterer Ausgestaltung der Erfindung wird die Brennstoffzelle mittels wenigstens einer weiteren Versorgungsleitung mit Brennstoff aus einer weiteren Brennstoffversorgung versorgt wird und in der Brennstoffzelle wird nicht verbrauchter Brennstoff aus der weiteren Brennstoffversorgung mittels wenigstens einer weiteren Auslassleitung aus der Brennstoffzelle abgeführt. Vorzugsweise wird der nicht verbrauchte Brennstoff der Versorgungsleitung wieder zugeführt. Dabei kann vorgesehen sein, dass der nicht verbrauchte Brennstoff zum Zwecke der Zuführung zu der Versorgungsleitung verdichtet wird.

In bevorzugter Ausgestaltung der Erfindung wird der Druck der weiteren Brennstoffversorgung auf den Betriebsdruck der Brennstoffzelle gemindert bzw. auf diesen Wert geregelt. Bei dem in der weiteren Brennstoffversorgung befindlichen Brennstoff handelt es vorzugsweise um Luft oder Sauerstoff.

In weiterer Ausgestaltung der Erfindung wird die Brennstoffzelle mittels eines Kühlmittels gekühlt und der in den Versorgungsleitungen befindliche Brennstoff vor Eintritt in die Brennstoffzelle mittels des Kühlmittels erwärmt.

Wie oben ausgeführt, kann zum Zwecke des Monitoring ein oder mehrere Ventile / Mehrwegeventile vorgesehen sein, mittels derer in einer Ventilstellung eine Leitung, beispielsweise eine Abluftleitung, mit der Brennstoffversorgung verbunden wird. Bei der Leitung handelt es sich vorzugsweise um eine die Brennstoffzelle umgehende Bypassleitung. In dieser Ventilstellung kann der in der Bypassleitung befindliche Druck ermittelt und auf diese Weise die Funktionsfähigkeit der Druckregelung überprüft werden. Dabei ist vorzugsweise vorgesehen, dass während der Überprüfung ein Durchsatz durch den Druckregler erfolgt.

Die Drosselung erfolgt vorzugsweise derart, dass der Durchsatz durch die Drossel unabhängig von den Umgebungsbedingungen und vom Druck eine bestimmte Grenze (Stopfgrenze) nicht übersteigt.

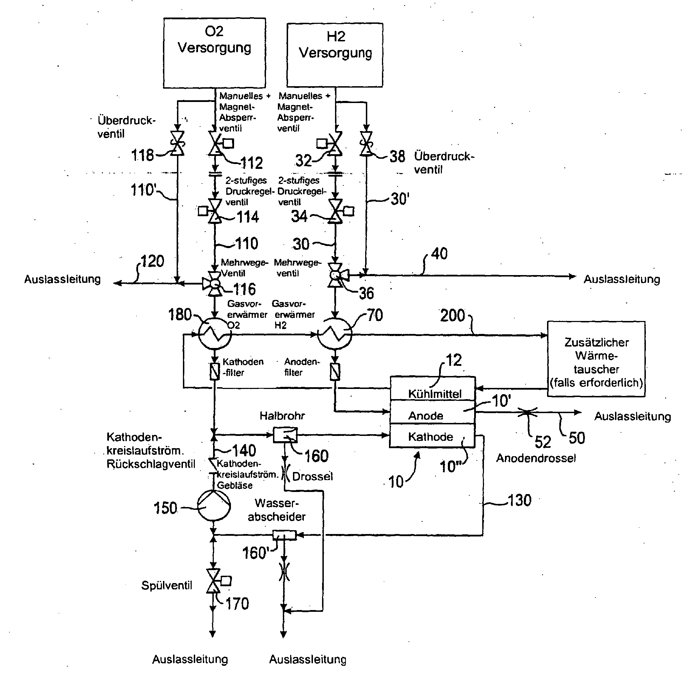

Weitere Einzelheiten und Vorteile der Erfindung werden anhand eines in der Zeichnung dargestellten Ausführungsbeispiels näher erläutert. Die einzige Figur zeigt eine schematische Übersicht über das erfindungsgemäße Brennstoffzellensystem.

Das Bezugszeichen 10 kennzeichnet die eine Anode 10' und eine Kathode 10"aufweisende PEM-Brennstoffzelle 10.

Die Anodenseite 10' der Brennstoffzelle 10 wird aus dem Wasserstoffdruckbehälter (H2 supply) mit Wasserstoff versorgt. Dieser steht über die Versorgungsleitung 30 mit der Anode 10' der Brennstoffzelle 10 in Verbindung. Stromabwärts des Wasserstoffbehälters befindet sich das Ventil 32, bei dem es sich um ein Auf-Zu-Ventil handelt. Stromabwärts des Ventils 32 befindet sich das Druckregelventil 34, bei dem es sich um einen zweistufigen Druckminderer handelt. Dieser dient dazu, den hohen, in dem Wasserstoffbehälter herrschenden Druck auf den Betriebsdruck der Anodenseite 10' der Brennstoffzelle 10 zu mindern. Stromabwärts des Druckregelventils 34 befindet sich das Mehrwegeventil 36 ("On-/Off-/Vent-Valve"), das in einer Stellung den Wasserstoffbehälter mit der Anode 10' der Brennstoffzelle 10 und in einer weiteren Stellung den Wasserstoffbehälter mit der Abluft- bzw. Bypassleitung 40 verbindet.

Bei der Brennstoffzelle 10 handelt es sich vorzugsweise um einen Stapel aus PEM-Zellen (PEM: Proton Exchange Membrane), d.h. um Festelektrolyt-Brennstoffzellen. Grundsätzlich sind auch andere Brennstoffzellen einsetzbar.

Stromabwärts der Anode 10' der Brennstoffzelle 10 erstreckt sich die Auslassleitung 50, in der sich die Drossel 52 befindet.

Vor dem Flug wird mittels des Druckregelventils 34 der gewünschte Betriebsdruck der Anodenseite 10' der Brennstoffzelle 10 eingestellt. Der Betriebsdruck wird stromabwärts des Druckregelventils 34 gemessen. Die Anode 10' der Brennstoffzelle 10 wird mit einem geringen, kontinuierlichen Wasserstoffüberschuss (overflow) betrieben. Der Wasserstoffstrom wird durch die stromabwärts der Brennstoffzelle 10 in der Auslassleitung 50 befindliche Drossel 52 gedrosselt und mittels dieser hinsichtlich des maximalen Durchsatzes auf die Stopfgrenze begrenzt.

Die Auslassleitung 50 mündet in den Stauluftkanal des Flugzeuges. In dem Stauluftkanal herrscht ein von der Flughöhe abhängiges Druckniveau. Bei größeren Flughöhen ergibt sich aufgrund der größeren Differenz zwischen dem am Druckregelventil 34 eingestellten Druck und dem in dem Stauluftkanal herrschenden Druck ein höherer Durchsatz durch die Anode 10' der Brennstoffzelle 10 als bei geringeren Flughöhen oder als im Bodenbetrieb. In jedem Fall stellt die Drossel 52 sicher, dass der Wasserstoffdurchsatz die Stopfgrenze nicht übersteigt. Ferner ist auch bei vergleichsweise hohem Druck in dem Stauluftkanal sichergestellt, dass die Anodenseite 10' der Brennstoffzelle 10 stets mit einem ausreichenden Wasserstoffstrom versorgt wird.

Soll die Funktionsfähigkeit des Absperrventils 32 sowie des Druckreglers 34, d.h. der Druckversorgung, geprüft werden, wird mittels des Ventils 36 die Wasserstoffquelle mit der Bypassleitung 40 verbunden. In der Bypassleitung 40 wird der sich dabei einstellende Druck gemessen. Auf diese Weise kann die korrekte Funktion des Ventils 32 sowie des Druckreglers 34 im Bypassbetrieb geprüft werden und es läßt sich auf diese Weise sicherstellen, dass das System auch im Notfallbetrieb sofort einsetzbar ist.

Wie aus der Figur weiter ersichtlich, befindet sich parallel zu der Versorgungsleitung 30 die Leitung 30', die den Wasserstoffbehälter 20 unmittelbar mit der Bypassleitung 40 verbindet und die das Überdruckventil 38 aufweist.

Die Kathodenseite 10'' der Brennstoffzelle 10 wird über die Versorgungsleitung 110 aus einem Sauerstoffbehälter (02 supply) mit Sauerstoff versorgt. In der Versorgungsleitung 110 befindet sich das Absperrventil 112, mittels dessen die Sauerstoffversorgung von der Brennstoffzelle 10 absperrbar ist. Stromabwärts des Ventils 112 befindet sich der Sauerstoffdruckregler 114, der analog zu der Wasserstoffversorgung auf der Kathodenseite 10" der Brennstoffzelle 10 einen bestimmten Druck einregelt. Stromabwärts des Reglers 114 befindet sich eine Druckmessstelle.

Weitere Druckmessstellen befinden sich jeweils stromaufwärts der Absperrventile 32 und 112 zur Messung des Behälterdruckes.

Die Druckverhältnisse werden mittels der Druckregler 32, 112 derart eingestellt, dass sich zwischen Anoden- und Kathodenseite eine Druckdifferenz ergibt, wobei der Druck in der Anode 10' über dem Druck in der Kathode 10'' liegt.

Stromabwärts des Druckregelventils 114 befindet sich das Mehrwegeventil 116 ("On-/Off-Nent-Valve"), das die Versorgung für Sauerstoff mit der Bypassleitung 120 verbindet, die an der Brennstoffzelle 10 vorbei führt und in die Umgebungsatmosphäre mündet.

Das Ventil 116 dient in entsprechender Weise wie das Ventil 36 für Wasserstoff zur Prüfung der Sauerstoffdruckversorgung, insbesondere des Ventils 112 sowie des Druckreglers 114, die sich beide in der Versorgungsleitung 110 für Sauerstoff befinden.

Parallel zu der Versorgungsleitung 110 ist die Bypassleitung 110' angeordnet, die den Sauerstoffbehälter unmittelbar mit der Umgebung verbindet, und in der das Überdruckventil 118 angeordnet ist.

Von der Kathode 10" der Brennstoffzelle 10 erstreckt sich die Auslassleitung 130 für nicht verbrauchten Sauerstoff, die mit der Zuführleitung 110 mittels der Verbindungsleitung 140 verbunden ist. Ferner ist der Verdichter 150 vorgesehen, der eine Kreislaufströmung mit Sauerstoff über die Kathode 10" der Brennstoffzelle 10 sicherstellt. Auch die Kathode 10" wird mit Brennstoffüberschuss betrieben. Die Kreislaufströmung bewirkt die effektive Abfuhr von Wasser auf der Kathodenseite 10" der Brennstoffzelle 10. Abgesehen davon wird eine ausreichende Befeuchtung der der Kathode 10" zugeführten Luft bzw. des Sauerstoffs bewirkt. Der Wasserabscheider 160, 160' dient dazu, überschüssiges Wasser abzuführen.

Sollte die Wasserabfuhr nicht ausreichend sein, kann mittels des Ventils 170 die Strömungsgeschwindigkeit auf der Kathodenseite der Brennstoffzelle 10 erhöht werden, wodurch entsprechend auch die Entfeuchtung bzw. die Wasserabfuhr verbessert wird.

Des Weiteren ist ein Kühlmittelkreislauf 200 vorgesehen, dessen Bestandteil die Kühleinrichtung 12 ist, die mit der Brennstoffzelle 10 in Verbindung steht und zu deren Kühlung dient, wie dies aus der Figur hervorgeht. Andererseits dient der durch das geschlossene Kühlmittelsystem 200 fließende Kühlmittelstrom zur Erwärmung von Wasserstoff und Sauerstoff mittels der in den jeweiligen Versorgungsleitungen 30, 110 angeordneten Wärmetauscher 70 und 180. Das in der Brennstoffzelle 10 erwärmte Kühlmittel führt zu einer Erwärmung der Versorgungsgase Wasserstoff und Sauerstoff in den entsprechenden Wärmetauschern 70 und 180.

Das Kühlmittel wird in einem in dem Stauluftkanal befindlichen Wärmetauscher gekühlt und fließt gefördert durch eine sodann zurück zur Kühleinrichtung 12 der Brennstoffzelle 10. Als Kühlmittel wird beispielsweise ein Wasser/Ethylenglycolgemisch mit einer Ethylenkonzentration von 60% verwendet. Grundsätzlich sind auch andere Zusammensetzungen und Kühlmittel einsetzbar.

Das erfindungsgemäße System kann als Notenergiesystem in Luftfahrzeugen eingesetzt werden. Grundsätzlich ist es ebenso denkbar, das System als Ersatz für Batterien in Luftfahrzeugen vorzusehen.

Die Steuerung des in der Figur dargestellten Systems übernimmt eine Anlagensteuerung, die mit den anzusteuernden Komponenten in Verbindung steht. Die mittels der Brennstoffzelle gewonnene Energie kann in beliebiger Weise, beispielsweise zum elektrischen Antrieb einer Hydraulikpumpe verwendet werden.

## Patentansprüche

1. Luftfahrzeug, insbesondere Flugzeug, mit wenigstens einer Brennstoffzelle (10), mit wenigstens einer Versorgungsleitung (30), die die Brennstoffzelle (10) mit einer Brennstoffversorgung verbindet, mit wenigstens einer Auslassleitung (50), mittels derer durch die Versorgungsleitung (30) zugeführter und in der Brennstoffzelle (10) nicht verbrauchter Brennstoff abgeführt wird, sowie mit Mitteln zur Beeinflussung des Brennstoffdurchsatzes durch die Brennstoffzelle (10),
**dadurch gekennzeichnet,**
**dass** die Mittel zur Beeinflussung des Brennstoffdurchsatzes einen in der wenigstens einen Versorgungsleitung (30) befindlichen Druckregler (34) sowie eine in der wenigstens einen Auslassleitung (50) befindliche Drossel (52) aufweisen, wobei der Druckregler den Druck der Brennstoffversorgung auf den Betriebsdruck der Brennstoffzelle (10) regelt und wobei die Drossel (52) den Durchsatz des durch die Auslassleitung (50) strömenden Brennstoffes vermindert, und wobei das Luftfahrzeug wenigstens einen Stauluftkanal aufweist und die Auslassleitung (50) in den Stauluftkanal mündet,
wobei eine Durchsatzregeleinrichtung nicht vorgesehen ist und
wobei die Brennstoffzelle bei konstantem Druck betrieben wird.

2. Luftfahrzeug nach Anspruch 1, **dadurch gekennzeichnet, dass** es sich bei der Brennstoffversorgung um einen Wasserstoffbehälter oder um eine Wasserstoff führende Leitung handelt und dass die Versorgungsleitung von der Brennstoffversorgung zu der Anode (10') der Brennstoffzelle (10) hinführt und die Auslassleitung (50) von der Anode (10') der Brennstoffzelle (10) abführt.

3. Luftfahrzeug nach einem der vorhergehenden Ansprüche, **dadurch gekennzeichnet, dass** eine weitere Versorgungsleitung (110), die eine weitere Brennstoffversorgung mit der Brennstoffzelle (10) verbindet, sowie eine weitere Auslassleitung (130) vorgesehen sind, mittels derer durch die weitere Versorgungsleitung (110) zugeführter und in der Brennstoffzelle nicht verbrauchter Brennstoff abgeführt wird.

4. Luftfahrzeug nach Anspruch 3, **dadurch gekennzeichnet, dass** eine die weitere Versorgungsleitung (110) mit der weiteren Auslassleitung (130) verbindende Verbindungsleitung (140) sowie ein Verdichter (150) vorgesehen sind, der in dem aus der weiteren Versorgungsleitung (110), der weiteren Auslassleitung (130) und der Verbindungsleitung (140) bestehenden Leitungssystem eine Kreislaufführung bewirkt.

5. Luftfahrzeug nach Anspruch 3 oder 4, **dadurch gekennzeichnet, dass** in der weiteren Versorgungsleitung (110) ein weiterer Druckregler (114) vorgesehen ist, wobei der weitere Druckregler (114) den Druck der Brennstoffversorgung auf den Betriebsdruck der Brennstoffzelle (10) mindert.

6. Luftfahrzeug nach einem der Ansprüche 3 bis 5, **dadurch gekennzeichnet, dass** es sich bei der weiteren Brennstoffversorgung um einen Sauerstoff oder Luft enthaltenden Behälter oder um eine Sauerstoff oder Luft führende Leitung handelt und dass die weitere Versorgungsleitung (110) von der Brennstoffversorgung zu der Kathode (10") der Brennstoffzelle (10) hin- und die weitere Auslassleitung (130) von der Kathode (10") der Brennstoffzelle (10) abführt.

7. Luftfahrzeug nach einem der Ansprüche 3 bis 6, **dadurch gekennzeichnet, dass** in dem aus der weiteren Versorgungsleitung (110), weiteren Auslassleitung (130) und Verbindungsleitung (140) bestehenden Leitungssystem ein oder mehrere Wasserabscheider (160, 160') angeordnet sind.

8. Luftfahrzeug nach einem der vorhergehenden Ansprüche, **dadurch gekennzeichnet, dass** in einer oder beiden der Versorgungsleitungen (30, 110) stromabwärts des Druckreglers (34, 114) ein oder mehrere Ventile (36, 116), vorzugsweise ein oder mehrere Mehrwegventile (36, 116), vorgesehen sind, die in einer ersten Position die Brennstoffversorgung mit der Brennstoffzelle (10) verbinden und in einer zweiten Position die Brennstoffversorgung mit einer weiteren Leitung (40, 120) oder Einheit verbinden.

9. Luftfahrzeug nach Anspruch 8, **dadurch gekennzeichnet, dass** es sich bei der weiteren Leitung (40, 120) um eine die Brennstoffzelle umgehende Leitung handelt.

10. Luftfahrzeug nach einem der vorhergehenden Ansprüche, **dadurch gekennzeichnet, dass** eine mit Kühlmittel beaufschlagte Kühleinrichtung (12) zur Kühlung der Brennstoffzelle (10) vorgesehen ist, die mit einer von dem Kühlmittel durchströmten Leitung (200) in Verbindung steht, in der zum Zwecke der Erwärmung des Brennstoffes wenigstens ein von Brennstoff durchströmter Wärmetauscher (70, 130) angeordnet ist, der brennstoffseitig stromaufwärts der Brennstoffzelle (10) und kühlmittelseitig stromabwärts der Brennstoffzelle (10) durchströmt wird.

11. Luftfahrzeug nach einem der vorhergehenden Ansprüche, **dadurch gekennzeichnet, dass** es sich bei der Brennstoffzelle (10) um eine PEM-Zelle handelt.

12. Luftfahrzeug nach einem der vorhergehenden Ansprüche, **dadurch gekennzeichnet, dass** das Drosselelement (52) auf seine Stopfgrenze ausgelegt ist, so dass der Durchsatz einen definierten Wert nicht übersteigt.

13. Verfahren zum Betreiben einer Brennstoffzelle (10) eines Luftfahrzeuges, wobei die Brennstoffzelle (10) mittels wenigstens einer Versorgungsleitung (30) mit Brennstoff aus einer Brennstoffversorgung versorgt wird und wobei in der Brennstoffzelle (10) nicht verbrauchter Brennstoff mittels wenigstens einer Auslassleitung (50) aus der Brennstoffzelle (10) abgeführt wird,
**dadurch gekennzeichnet,**
**dass** der Brennstoffdurchsatz **dadurch** eingestellt wird, dass in der Versorgungsleitung (30) der Druck der Brennstoffversorgung auf den Betriebsdruck der Brennstoffzelle (10) geregelt wird und dass in der Auslassleitung (50) eine Drosselung des in der Auslassleitung (50) strömenden nicht verbrauchten Brennstoffes erfolgt, wobei wenigstens ein Teil des nicht verbrauchten Brennstoffes über die Auslassleitung (50) in einen Stauluftkanal des Luftfahrzeugs eingeleitet wird,
wobei eine Durchsatzregeleinrichtung nicht vorgesehen ist und
wobei die Brennstoffzelle bei konstantem Druck betrieben wird.

14. Verfahren nach Anspruch 13, **dadurch gekennzeichnet, dass** es sich bei dem Brennstoff um Wasserstoff handelt.

15. Verfahren nach Anspruch 13 oder 14, **dadurch gekennzeichnet, dass** die Brennstoffzelle (10) mittels wenigstens einer weiteren Versorgungsleitung (110) mit Brennstoff aus einer weiteren Brennstoffversorgung versorgt wird und in der Brennstoffzelle (10) nicht verbrauchter Brennstoff aus der weiteren Brennstoffversorgung mittels wenigstens einer weiteren Auslassleitung (130) aus der Brennstoffzelle (10) abgeführt wird.

16. Verfahren nach Anspruch 15, **dadurch gekennzeichnet, dass** in der Brennstoffzelle (10) nicht verbrauchter Brennstoff der Versorgungsleitung (110) wieder zugeführt wird.

17. Verfahren nach Anspruch 16, **dadurch gekennzeichnet, dass** der nicht verbrauchte Brennstoff zum Zwecke der Zuführung zu der Versorgungsleitung (110) verdichtet wird.

18. Verfahren nach einem der Ansprüche 13 bis 17, **dadurch gekennzeichnet, dass** in der weiteren Versorgungsleitung (110) der Druck der weiteren Brennstoffversorgung auf den Betriebsdruck der Brennstoffzelle (10) gemindert wird.

19. Verfahren nach einem der Ansprüche 15 bis 18, **dadurch gekennzeichnet, dass** es sich bei dem Brennstoff um Luft oder Sauerstoff handelt.

20. Verfahren nach einem der Ansprüche 13 bis 19, **dadurch gekennzeichnet, dass** die Brennstoffzelle (10) mittels eines Kühlmittels gekühlt wird und dass der in den Versorgungsleitungen befindliche Brennstoff vor Eintritt in die Brennstoffzelle (10) mittels des Kühlmittels erwärmt wird.

21. Verfahren nach einem der Ansprüche 13 bis 20, **dadurch gekennzeichnet, dass** ein oder mehrere Ventile, vorzugsweise ein oder mehrere Mehrwegeventile vorgesehen sind, die in einer ersten Position die Brennstoffversorgung mit der Brennstoffzelle (10) verbinden und in einer zweiten Position die Brennstoffversorgung mit einer weiteren Leitung (40, 120) oder Einheit verbinden.

22. Verfahren nach Anspruch 21, **dadurch gekennzeichnet, dass** das oder die Ventile in einer zweiten Position die Brennstoffzelle (10) mit einer die Brennstoffzelle umgehenden Leitung (40, 120) verbinden.

23. Verfahren nach einem der Ansprüche 13 bis 22, **dadurch gekennzeichnet, dass** die Drosselung derart erfolgt, dass der Durchsatz durch die Drossel einen bestimmten Wert nicht übersteigt.

## Claims

1. Airborne vehicle, in particular an aircraft, having at least one fuel cell (10) having at least one supply line (30) which connects the fuel cell (10) to a fuel supply, having at least one outlet line (50) by means of which fuel which has been supplied through the supply line (30) and has not been consumed in the fuel cell (10) is carried away, and having means for influencing the fuel flow rate through the fuel cell (10),
**characterized in that**
the means for influencing the fuel flow rate have a pressure regulator (34), which is located in the at least one supply line (30), and a restrictor (52), which is located in the at least one outlet line (50), with the pressure regulator regulating the pressure of the fuel supply at the operating pressure of the fuel cell (10), and with the restrictor (52) reducing the flow rate of the fuel flowing through the outlet line (50), and with the airborne vehicle having at least one ram-air channel and with the outlet line (50) opening into the ram-air channel,
wherein no flow-rate regulating device is provided, and
wherein the fuel cell is operated at a constant pressure.

2. Airborne vehicle according to Claim 1, **characterized in that** the fuel supply comprises a hydrogen container or a line carrying hydrogen, and **in that** the supply line leads from the fuel supply to the anode (10') of the fuel cell (10), and the outlet line (50) leads away from the anode (10') of the fuel cell (10).

3. Airborne vehicle according to one of the preceding claims, **characterized in that** a further supply line (110), which connects a further fuel supply to the fuel cell (10), and a further outlet line (130) are provided, by means of which fuel which has been supplied through the further supply line (110) and has not been consumed in the fuel cell is carried away.

4. Airborne vehicle according to Claim 3, **characterized in that** a connecting line (140), which connects the further supply line (110) to the further outlet line (130), and a compressor (150) are provided, which results in a circulating flow in the line system which comprises the further supply line (110), the further outlet line (130) and the connecting line (140).

5. Airborne vehicle according to Claim 3 or 4, **characterized in that** a further pressure regulator (114) is provided in the further supply line (110), with the further pressure regulator (114) reducing the pressure of the fuel supply to the operating pressure of the fuel cell (10).

6. Airborne vehicle according to one of Claims 3 to 5, **characterized in that** the further fuel supply comprises a container containing oxygen or air or a line which carries oxygen or air, and **in that** the further supply line (110) leads from the fuel supply to the cathode (10") of the fuel cell (10), and the further outlet line (130) leads away from the cathode (10") of the fuel cell (10).

7. Airborne vehicle according to one of Claims 3 to 6, **characterized in that** one or more water separators (160, 160') is or are arranged in the line system which comprises the further supply line (110), the further outlet line (130) and the connecting line (140).

8. Airborne vehicle according to one of the preceding claims, **characterized in that** one or more valves (36, 116), preferably one or more multiway valves (36, 116), is or are provided in one or both of the supply lines (30, 110) downstream from the pressure regulator (34, 114), which valves (36, 116) connect the fuel supply to the fuel cell (10) in a first position, and connect the fuel supply to a further line (40, 120) or unit in a second position.

9. Airborne vehicle according to Claim 8, **characterized in that** the further line (40, 120) comprises a line which bypasses the fuel cell.

10. Airborne vehicle according to one of the preceding claims, **characterized in that** a cooling device (12) to which a coolant is applied, is provided in order to cool the fuel cell (10) and is connected to a line (200) through which the coolant flows and in which at least one heat exchanger (70, 130), through which fuel flows, is arranged in order to heat the fuel, through which heat exchanger (70, 130) flow passes upstream of the fuel cell (10) on the fuel side and downstream of the fuel cell (10) on the coolant side.

11. Airborne vehicle according to one of the preceding claims, **characterized in that** the fuel cell (10) is a PEM cell.

12. Airborne vehicle according to one of the preceding claims, **characterized in that** the blocking limit of the restrictor element (52) is designed such that the flow rate does not exceed a defined value.

13. Method for operation of a fuel cell (10) in an airborne vehicle, with the fuel cell (10) being supplied with fuel from a fuel supply by means of at least one supply line (30), and with fuel which has not been consumed in the fuel cell (10) being carried away from the fuel cell (10) by means of at least one outlet line (50),
**characterized in that**
the fuel flow rate is set by regulating the pressure of the fuel supply in the supply line (30) at the operating pressure of the fuel cell (10), and by the fuel which is flowing in the outlet line (50) and has not been consumed being restricted in the outlet line (50), with at least a portion of the fuel which has not been consumed being introduced via the outlet line (50) into a ram-air channel of the airborne vehicle,
wherein no flow-rate regulating device is provided, and
wherein the fuel cell is operated at a constant pressure.

14. Method according to Claim 13, **characterized in that** the fuel is hydrogen.

15. Method according to Claim 13 or 14, **characterized in that** the fuel cell (10) is supplied with fuel from a further fuel supply by means of at least one further supply line (110), and fuel from the further fuel supply which has not been consumed in the fuel cell (10) is carried away from the fuel cell (10) by means of at least one further outlet line (130).

16. Method according to Claim 15, **characterized in that** fuel which has not been consumed in the fuel cell (10) is supplied to the supply line (110) again.

17. Method according to Claim 16, **characterized in that** the fuel which has not been consumed is compressed in order to be supplied to the supply line (110).

18. Method according to one of Claims 13 to 17, **characterized in that** the pressure of the further fuel supply in the further supply line (110) is reduced to the operating pressure of the fuel cell (10).

19. Method according to one of Claims 15 to 18, **characterized in that** the fuel is air or oxygen.

20. Method according to one of Claims 13 to 19, **characterized in that** the fuel cell (10) is cooled by means of a coolant, and **in that** the fuel which is located in the supply lines is heated by means of the coolant before it enters the fuel cell (10).

21. Method according to one of Claims 13 to 20, **characterized in that** one or more valves, preferably one or more multiway valves is or are provided, connect the fuel supply to the fuel cell (10) in a first position and connect the fuel supply to a further line (40, 120) or unit in a second position.

22. Method according to Claim 21, **characterized in that** in a second position, the valve or valves connects or connect the fuel cell (10) to a line (40, 120) which bypasses the fuel cell.

23. Method according to one of Claims 13 to 22, **characterized in that** the restriction is implemented such that the flow rate through the restrictor does not exceed a specific value.

## Revendications

1. Aéronef, en particulier avion, avec au moins une pile à combustible (10), avec au moins une conduite d'alimentation (30), qui relie la pile à combustible (10) à une alimentation en combustible, avec au moins une conduite d'évacuation (50) au moyen de laquelle le combustible amené par la conduite d'alimentation (30) et non utilisé dans la pile à combustible (10) est évacué, et avec des moyens pour agir sur le débit d'écoulement du combustible à travers la pile à combustible (10),
**caractérisé en ce que**
les moyens pour agir sur le débit d'écoulement de combustible comprennent un régulateur de pression (34) se trouvant dans la au moins une conduite d'alimentation (30) ainsi qu'un papillon (52) se trouvant dans la au moins une conduite d'évacuation (50), où le régulateur de pression règle la pression de l'alimentation en combustible à la pression de fonctionnement de la pile à combustible (10), et où le papillon (52) réduit le débit du combustible s'écoulant à travers la conduite d'évacuation (50), et où l'aéronef présente au moins un canal d'air de refoulement, et la conduite d'écoulement (50) débouche dans le canal d'air de refoulement,
où une installation de régulation de débit n'est pas prévue, et
où la pile à combustible est amenée à fonctionner à pression constante.

2. Aéronef selon la revendication 1, **caractérisé en ce que** dans le cas de l'alimentation en combustible, il s'agit d'un contenant d'hydrogène ou d'une conduite de guidage d'hydrogène, et **en ce que** la conduite d'alimentation mène de l'alimentation en combustible à l'anode (10') de la pile à combustible (10), et **en ce que** la conduite d'évacuation (50) évacue depuis l'anode (10') de la pile à combustible (10).

3. Aéronef selon l'une des revendications précédentes, **caractérisé en ce qu'**une conduite d'alimentation supplémentaire (110), qui relie une alimentation en combustible supplémentaire à la pile à combustible (10), ainsi qu'une conduite d'évacuation supplémentaire (130) sont prévues, au moyen desquelles est évacué le combustible amené par la conduite d'alimentation supplémentaire (110) et non utilisé dans la pile à combustible.

4. Aéronef selon la revendication 3, **caractérisé en ce que** sont prévues une conduite de liaison (140) reliant la conduite d'alimentation supplémentaire (110) à la conduite d'évacuation supplémentaire (130) ainsi qu'un compresseur (150), qui provoque dans le système de conduite constitué de la conduite d'alimentation supplémentaire (110), de la conduite d'évacuation supplémentaire (130) et de la conduite de liaison (140) un guidage en circuit.

5. Aéronef selon la revendication 3 ou 4, **caractérisé en ce qu'**il est prévu dans la conduite d'alimentation supplémentaire (110) un régulateur de pression supplémentaire (114), où le régulateur de pression supplémentaire (114) réduit la pression de l'alimentation en combustible à la pression de fonctionnement de la pile à combustible (10).

6. Aéronef selon l'une des revendications 3 à 5, **caractérisé en ce qu'**il s'agit dans l'alimentation en combustible supplémentaire d'un contenant renfermant de l'oxygène ou de l'air ou bien d'une conduite de guidage d'oxygène ou d'air, et **en ce que** la conduite d'alimentation supplémentaire (110) mène de l'alimentation en combustible à la cathode (10") de la pile à combustible (10), et la conduite d'évacuation supplémentaire (130) évacue depuis la cathode (10") de la pile à combustible (10).

7. Aéronef selon l'une des revendications 3 à 6, **caractérisé en ce que** sont disposés dans le système de conduite constitué de la conduite d'alimentation supplémentaire (110), de la conduite d'évacuation supplémentaire (130) et de la conduite de liaison (140) un ou plusieurs séparateurs d'eau (160, 160').

8. Aéronef selon l'une des revendications précédentes, **caractérisé en ce que** sont prévues dans une ou les deux des conduites d'alimentation (30, 110), en aval du régulateur de pression (34, 114), une ou plusieurs vannes (36, 116), de préférence une ou plusieurs vannes à plusieurs voies (36, 116) qui, dans une première position, relient l'alimentation en combustible à la pile à combustible (10) et relient dans une deuxième position l'alimentation en combustible à une conduite supplémentaire (40, 120) ou à l'unité.

9. Aéronef selon la revendication 8, **caractérisé en ce que** dans le cas de la conduite supplémentaire (40, 120), il s'agit d'une conduite contournant la pile à combustible.

10. Aéronef selon l'une des revendications précédentes, **caractérisé en ce qu'**il est prévu une installation de refroidissement (12) chargée en agent de refroidissement pour le refroidissement de la pile à combustible (10), qui est en liaison avec une conduite (200) traversée par l'agent de refroidissement, dans laquelle est disposé, dans le but de l'échauffement du combustible, au moins un échangeur de chaleur (70, 130) traversé par le combustible, qui est traversé, côté combustible, en amont de la pile à combustible (10) et, côté agent de refroidissement, en aval de la pile à combustible (10).

11. Aéronef selon l'une des revendications précédentes, **caractérisé en ce que** dans le cas de la pile à combustible (10), il s'agit d'une pile PEM.

12. Aéronef selon l'une des revendications précédentes, **caractérisé en ce que** l'élément formant papillon (52) est conçu à sa limite d'arrêt pour que le débit ne dépasse pas une valeur définie.

13. Procédé de fonctionnement d'une pile à combustible (10) d'un aéronef, dans lequel la pile à combustible (10) est alimentée par au moins une conduite d'alimentation (30) en combustible d'une alimentation en combustible, et dans lequel le combustible non utilisé dans la pile à combustible (10) est évacué par au moins une conduite d'évacuation (50) de la pile à combustible (10),
**caractérisé en ce que**
le débit de combustible est réglé **en ce que** dans la conduite d'alimentation (30), la pression de l'alimentation en combustible est réglée à la pression de fonctionnement de la pile à combustible (10), et **en ce que** dans la conduite d'évacuation (50) a lieu un étranglement du combustible non utilisé s'écoulant dans la conduite d'évacuation (50), où au moins une partie du combustible non utilisé est introduite par la conduite d'évacuation (50) dans un canal d'air de refoulement de l'aéronef,
où une installation de régulation de débit n'est pas prévue et
où la pile à combustible est amenée à fonctionner à pression constante.

14. Procédé selon la revendication 13, **caractérisé en ce que** dans le cas du combustible, il s'agit de l'hydrogène.

15. Procédé selon la revendication 13 ou 14,
**caractérisé en ce que** la pile à combustible (10) est alimentée par au moins une autre conduite d'alimentation (110) en combustible d'une alimentation en combustible supplémentaire, et que le combustible non utilisé dans la pile à combustible (10) est évacué de l'alimentation en combustible supplémentaire au moyen d'au moins une autre conduite d'évacuation (130) de la pile à combustible (10).

16. Procédé selon la revendication 15, **caractérisé en ce que** le combustible non utilisé dans la pile à combustible (10) est ramené dans la conduite d'alimentation (110).

17. Procédé selon la revendication 16, **caractérisé en ce que** le combustible non utilisé est compressé dans le but de l'amenée à la conduite d'alimentation (110).

18. Procédé selon l'une des revendications 13 à 17, **caractérisé en ce que**, dans la conduite d'alimentation supplémentaire (110), la pression de l'alimentation en combustible supplémentaire est réduite à la pression de fonctionnement de la pile à combustible (10).

19. Procédé selon l'une des revendications 15 à 18, **caractérisé en ce que** dans le cas du combustible, il s'agit de l'air ou d'oxygène.

20. Procédé selon l'une des revendications 13 à 19, **caractérisé en ce que** la pile à combustible (10) est refroidie au moyen d'un agent de refroidissement, et **en ce que** le combustible se trouvant dans les conduites d'alimentation, avant l'entrée dans la pile à combustible (10), est chauffé au moyen de l'agent de refroidissement.

21. Procédé selon l'une des revendications 13 à 20, **caractérisé en ce qu'**une ou plusieurs vannes, de préférence une ou plusieurs vannes à plusieurs voies sont prévues qui, dans une première position, relient l'alimentation en combustible avec la pile à combustible (10) et, dans une deuxième position, relient l'alimentation en combustible à une conduite supplémentaire (40, 120) ou à l'unité.

22. Procédé selon la revendication 21, **caractérisé en ce que** la ou les vannes, dans une deuxième position, relient la pile à combustible (10) à une conduite (40, 120) contournant la pile à combustible.

23. Procédé selon l'une des revendications 13 à 22, **caractérisé en ce que** l'étranglement a lieu de telle sorte que le débit à travers le papillon ne dépasse pas une valeur définie.
